# EUROPEAN PATENT SPECIFICATION

(11) **EP 4 168 694 B1**
(45) Date of publication and mention of the grant of the patent: **10.07.2024**
(21) Application number: 21746578.0
(22) Date of filing: 22.06.2021
(51) Int. Cl.: F16H 61/4017, B60M 1/28, H02G 1/04, H02G 11/02, F16H 61/4192

(54) **APPARATUS AND METHOD FOR STRINGING CABLES**
VORRICHTUNG UND VERFAHREN ZUM VERLEGEN VON KABELN
APPAREIL ET PROCÉDÉ DE POSE DE CÂBLES

(30) Priority: 23.06.2020 IT 202000014941
(43) Date of publication of application: 26.04.2023
(73) Proprietor: Tesmec S.p.A., 20123 Milano (IT)
(72) Inventor: OSCAR, Alberto, 24063 CASTRO (IT); COLLEONI, Matteo, 24036 PONTE SAN PIETRO (IT); PEDROCCHI, Roberto, 24060 SOLTO COLLINA (IT); TOLOMEO, Antonio, 24060 CASAZZA (IT)
(74) Representative: Petraz, Gilberto Luigi
(86) International application number: PCT/IT2021/050194
(87) International publication number: WO 2021/260749

(56) References cited:
- EP-A1- 2 778 419
- WO-A1-2017/072230
- WO-A2-2014/087222
- GB-A- 2 341 011

## Description

### FIELD OF THE INVENTION

The present invention concerns an apparatus and a method for stringing cables, in particular a method for safely managing a cable stringing apparatus.

The present invention concerns in particular stringing apparatuses or machines, for example for stringing a railway contact line, a high voltage overhead power line or other, and in general overhead lines which provide the so-called "braked" laying of such cables.

### BACKGROUND OF THE INVENTION

It is known that the traditional stringing system of an electric line provides the so-called "braked" laying using machines with multiple capstans: a winch machine, which retrieves a steel cable with a drawing function, and a brake machine, which applies a controlled tension to the conductors during the laying step in order to ensure that they can remain suspended from the appropriate guide devices provided on the intermediate supports, so as not to drag on the ground or against obstacles present under the conductors themselves, such as road or rail crossings, intersections with other power lines, or other.

Furthermore, the use of a helicopter to draw the pilot rope from the brake station to the winch station, or sometimes even the final conductor, is increasingly widespread, thus eliminating the winch machine in this operation.

The technology of braked stringing is then also applied in the stringing of the electric catenary for railway traction, with the difference that the brake machine is mounted on a moving wagon, which can be self-propelled or pulled, and thanks to the movement of the wagon the brake releases the contact cable or suspension cable with controlled tension.

Traditional braked laying machines are known to be equipped with an automatically driven mechanical safety device called a negative brake, the function of which is to hold the load of the strung conductor, both when the machine is stopped, that is, when not powered, and also in emergency situations, for example due to a circuit failure. A similar device is installed on the reel holder stands which feed the conductor from the reel to the brake capstans, ensuring the necessary counter-pull to keep the conductor balanced, both in static and dynamic situations.

Traditional winch machines for braked stringing are normally equipped with two devices to limit and control the overload, which, if used correctly, prevent serious overload situations along the path of the strung cables.

Conversely, the use of means different from the traditional winch stringing machines to carry out the traction and/or translation operation, as in the case of the railway wagon or helicopter, means that a possible sudden stop of the brake machine, even for extraordinary reasons, causing the closure of the negative brake, since it is an automatically driven safety device to hold the load, generates a recoil situation on the translation means and a consequent overload on the tensioned cable, which can lead to damage to the cable itself, and can even break it, with obvious consequences of risk to the safety of the operators and everything under the conductor itself, effectively nullifying the safety function of the negative brake. In the case of the helicopter, the recoil can lead to the instability of the aircraft, with obvious consequences.

On the other hand, if the brake machine stops, a normal valve to regulate the drawing action, with piloted command, whether it be hydraulic or electric, moves to the maximum open position, that is, to the minimum pressure of the regulation field, once the piloted command itself is no more, so that traditional systems with an accumulator to keep the negative brake open lose their effectiveness, since the tension in the conductor is no longer controlled.

Stringing apparatuses exist, which try to solve part of the above problems by inhibiting the automatic closing function of the negative brake, thus eliminating or at least limiting the recoil, and at the same time keeping the main valve to regulate the drawing action under pressure, keeping the conductor under tension and hence avoiding the risk of the conductor falling to the ground.

Known stringing apparatuses can also be provided with safety systems which, however, prove to be inefficient and do not fully solve the problems of safety and control, for example they do not allow the functions of the stringing apparatus to be abruptly interrupted, allowing to conclude the stringing operations in total safety.

Furthermore, known stringing systems and apparatuses have some other limitations, in particular related to the reliability of the mechanical and hydraulic members used in the practical construction of the stringing apparatus.

A known safety system for a brake-type stringing machine is described in WO-A-2014087222.

This system comprises a negative brake which can be selectively activated and deactivated in order to constrain and respectively allow the rotation of at least one cable support capstan, a pumping device connected to the negative brake and configured to deactivate the latter during normal use of the stringing machine, putting a work fluid under pressure, means to accumulate the pressure energy of said work fluid, and a maximum pressure valve configured to regulate the working pressure of a hydraulic motor which controls the torque applied to the capstan. The system also comprises a motorized drive device connected to the maximum pressure valve and provided to selectively regulate the action of the latter on the hydraulic motor, even if at least the pumping device malfunctions, in order to maintain the working pressure of the hydraulic motor and keep the negative brake deactivated by means of the intervention of the pressure energy accumulation means.

Furthermore, this system comprises (see for example fig. 1 of WO-A-2014087222) at least one distributor valve 26 of the bistable type. This distributor valve, in the event of an electric power failure, maintains its working position. Said distributor valve is substantially a direction selector valve, which does not condition the pressure of the circuit or other operating parameters and is not directly associated with the maximum pressure valve 18.

Another known cable stringing apparatus is described in WO-A-2017072230.

This cable stringing apparatus comprises a work unit carrying at least one pair of cable support capstans and provided with a negative brake cooperating with said pair of capstans; a cable winding and unwinding unit provided with a dynamic braking device cooperating with a cable winding and unwinding reel; a regulation and safety hydraulic circuit in which a work fluid flows and with which are associated: a first unit to transmit power to the work unit and to pump the work fluid to the negative brake and to the dynamic braking device, a second motorized braking unit of the work unit cooperating with a third command unit of the negative brake, and a fourth unit to regulate the winding and unwinding unit comprising at least one motorized counter-pull valve of the winding and unwinding unit and cooperating with said power transmission unit.

Like the system described in WO-A-2014087222, this apparatus also comprises a bistable distributor valve 21 and safety valves 26, 46 (see for example fig. 1 of WO-A-2017072230). However, in this case too, the distributor valve is substantially a direction selector valve, which does not condition the pressure of the circuit or other operating parameters and is not directly associated with a maximum pressure valve.

Another cable stringing apparatus is described in document GB-A-2341011. This stringing apparatus is substantially provided with a load limiting system which acts on a winch machine.

This apparatus also comprises a distributor valve 34 (see Fig. 5 of GB-A-234011) which, however, as for the apparatuses of the documents described above, is substantially a direction selector valve, which does not condition the pressure of the circuit or other operating parameters and is not directly associated with a maximum pressure valve.

There is therefore a need to perfect an apparatus and a method for stringing cables which can overcome at least one of the disadvantages of the state of the art.

In particular, one purpose of the present invention is to provide a perfected cable stringing apparatus which, in emergency situations, can be secured, effectively and automatically, whatever the type of work or operating mode it is carrying out, therefore for example, winch mode, brake mode or assisted braking mode, and which therefore allows operators to conclude or stop, where possible, the operations of stringing the cables or conductors in maximum safety.

Another purpose of the present invention is to provide a cable stringing apparatus which solves or at least limits the problems deriving from the reliability of the mechanical and hydraulic members of known systems and which limits the overload on the cables, in particular in emergency situations.

Another purpose is to perfect a method for stringing cables, in particular a method to manage a cable stringing apparatus safely, which allows, in a rapid, effective and automatic way, to obtain conditions of maximum safety, in particular in emergency situations of the stringing apparatus.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, an apparatus for stringing cables according to the present invention comprises: a work unit carrying at least one rotating device to support and tension the cables provided with at least one pair of capstans; a unit for winding and unwinding the cables provided with at least one reel for winding and unwinding the cables; a regulation and safety hydraulic circuit in which a work fluid flows and with which at least the work unit and the unit for winding and unwinding the cables are associated.

According to one aspect of the invention, the stringing apparatus comprises:
at least a first regulation unit associated with the work unit and provided with at least one proportional valve with reverse logic for regulating and setting the pressure of the hydraulic circuit and for drawing the cables to the capstans, wherein the proportional valve with reverse logic is configured to move to the position of maximum closure, that is, to the maximum pressure of the regulating range, once the piloting of the valve itself fails, and at least one protection valve for the hydraulic circuit configured to limit the maximum pressure in the hydraulic circuit, in particular in the first regulation unit; and
and at least a second regulation unit associated with the unit for winding and unwinding the cables and provided with at least one proportional valve with reverse logic for regulating and setting the pressure of the hydraulic circuit and for drawing to the reel, wherein the proportional valve with reverse logic is configured to move to the position of maximum closure, that is, to the maximum pressure of the regulating range, once the piloting of the valve itself fails, and at least one protection valve for the hydraulic circuit configured to limit the maximum pressure in the hydraulic circuit, and at least one protection valve for the hydraulic circuit configured to limit the maximum pressure in the hydraulic circuit, in particular in the second regulation unit.

Essentially, by proportional valve with reverse logic we therefore mean a regulation valve that moves to the position of maximum closure, that is, to the maximum pressure of the regulating range, once the piloting of the valve itself fails.

Advantageously, by means of the regulation units associated with the work unit and with the unit for winding and unwinding the cables, it is possible, in emergency situations, to secure the stringing apparatus, effectively and automatically, whatever the type of work or operating mode in progress, therefore for example winch mode, brake mode or assisted braking mode, in order to allow operators to conclude or stop, where possible, the operations for stringing the cables or conductors in maximum safety.

The present apparatus for stringing cables also solves or at least limits the problems arising from the reliability of the mechanical and hydraulic members used in known stringing systems and advantageously allows to limit the overload on the cables, in particular in emergency situations.

According to another aspect of the invention, the protection valve for the hydraulic circuit can be a manually commanded relief valve.

The work unit and the unit for winding and unwinding the cables can be provided with negative brakes cooperating with the rotating device and with the reel.

The negative brake can be associated with at least one opening electro valve provided in the first regulation unit.

The regulation units can also comprise at least one direction valve.

The first regulation unit can comprise at least one hydraulic accumulator.

The first regulation unit can also comprise at least one recovery and release valve.

The second regulation unit can comprise at least one discharge valve.

The second regulation unit can also comprise at least one enabling valve.

Another purpose of the present invention is a railway wagon for stringing a railway contact line, mobile along a railway line and comprising an apparatus for stringing cables as defined above.

Another purpose of the invention is a method for stringing cables by means of an apparatus for stringing cables as described above, comprising, in an emergency situation that causes the failure of the electric power supply of the proportional valves with reverse logic, increasing the pressure in the regulation units of the hydraulic circuit by means of maximum closure of the proportional valves with reverse logic and limiting the maximum pressure by means of the protection valves.

In known plants and apparatuses, in the event of a power failure, in an emergency situation that causes the failure of the electric power supply of the proportional valves, the draw is normally reduced and the distributor valves are taken to a situation of maximum opening and not of maximum closure and pressure increase as in the present apparatus.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a lateral view of an apparatus for stringing cables according to the present invention;
- fig. 2 is a schematic representation of part of a hydraulic circuit of the present apparatus for stringing cables;
- fig. 3 is a schematic representation of another part of the hydraulic circuit of the present apparatus for stringing cables.

To facilitate comprehension, the same reference numbers have been used, where possible, to identify identical common elements in the drawings.

### DETAILED DESCRIPTION OF SOME EMBODIMENTS

We will now refer in detail to the possible embodiments of the invention, of which one or more examples are shown in the attached drawings by way of a non-limiting example. The phraseology and terminology used here is also for the purposes of providing non-limiting examples.

The following description will refer in particular to a railway stringing apparatus, but the following considerations can be applied to any aerial stringing apparatus or process.

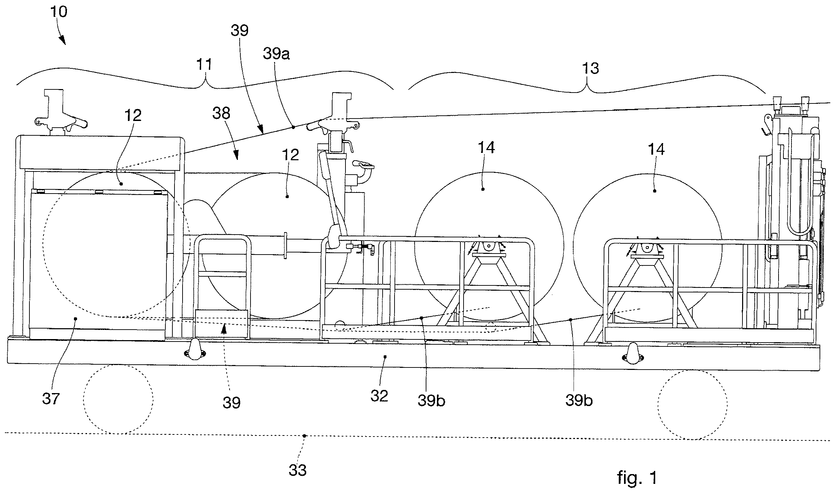

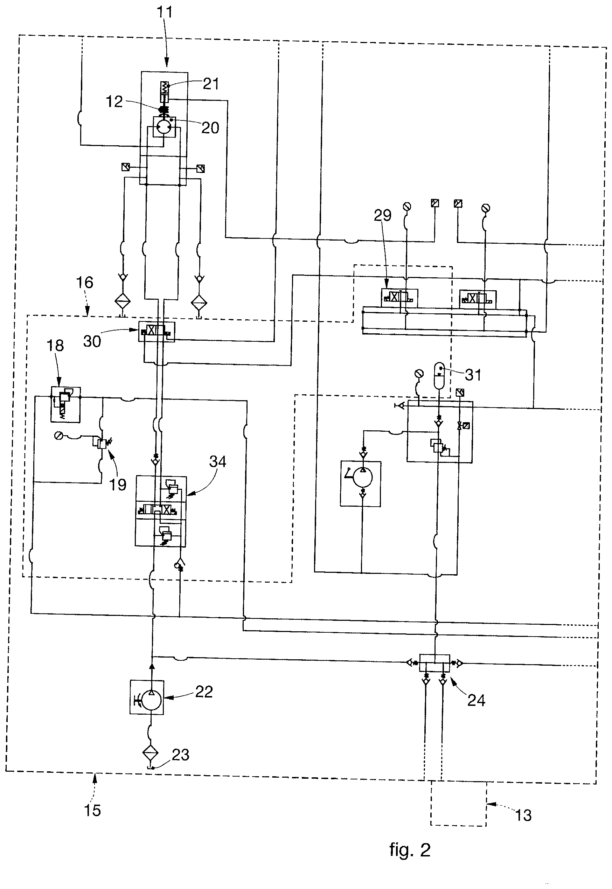

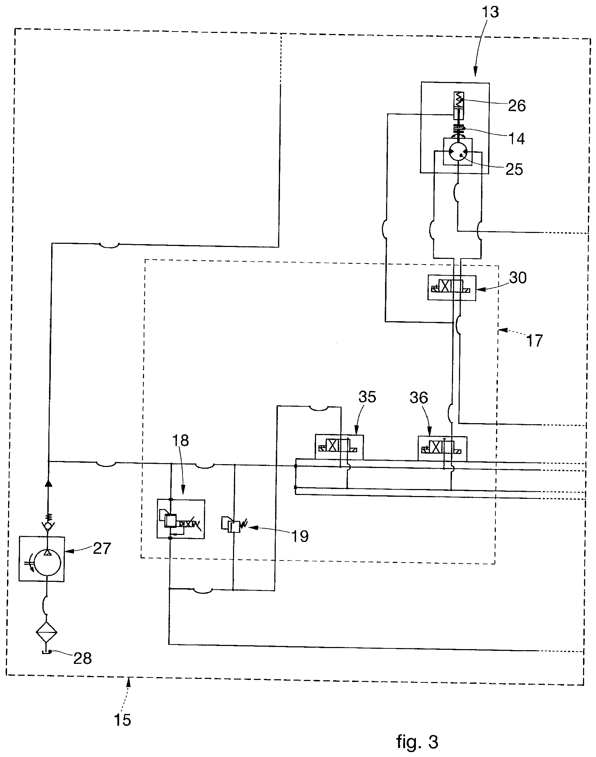

With reference to the attached drawings, see for example fig. 1, an apparatus 10 for stringing cables 39 according to the present invention comprises: a work unit 11 carrying at least one rotating device 38 to support and tension the cables 39 provided with at least one pair of capstans 12; a unit 13 for winding and unwinding the cables 39 provided with at least one reel 14 for winding and unwinding the cables 39; a regulation and safety hydraulic circuit 15, see also fig. 2 and fig. 3, in which a work fluid flows and with which at least the work unit 11 and the unit 13 for winding and unwinding the cables 39 are associated.

Furthermore, fig. 1 shows the branches 39a of the cables 39 on the draw side and the branches 39b of the cables 39 on the counter-draw side. The capstans 12 substantially carry out a tensioning and therefore an amplification of the draw of the cables 39 coming from the reels 14, see the branches 39b. Therefore, the branches 39a that stick out from the capstans 12 will have a greater tension than the branches 39b that reach the capstans 12 from the reels 14. In order to correctly carry out the tensioning operations by means of rolling friction, the capstans 12 require a unit 13 for winding and unwinding the cables 39 located upstream of the capstans 12.

The present apparatus 10 comprises at least a first regulation unit 16 associated with the work unit 11 and at least a second regulation unit 17 associated with the unit 13 for winding and unwinding the cables 39.

The first regulation unit 16, see fig. 2, is provided with at least one proportional valve with reverse logic 18, for regulating and setting the pressure of the hydraulic circuit 15 and for drawing the cables 39 to the capstans 12.

The proportional valve with reverse logic 18 associated with the first regulation unit 16 is configured to move to the position of maximum closure, that is, to the maximum pressure of the regulating range, once the piloting of the valve itself fails.

The first regulation unit 16 also comprises at least one protection valve 19 for the hydraulic circuit 15 configured to limit the maximum pressure in the hydraulic circuit 15, in particular the pressure in the first regulation unit 16.

The second regulation unit 17, see fig. 3, is also provided with at least one proportional valve with reverse logic 18, for regulating and setting the pressure of the hydraulic circuit 15 and for drawing the cables 39 to the reel 14.

The proportional valve with reverse logic 18 associated with the second regulation unit 17 is also configured to move to the position of maximum closure, that is, to the maximum pressure of the regulating range, once the piloting of the valve itself fails.

The second regulation unit 17 also comprises at least one protection valve 19 for the hydraulic circuit 15 configured to limit the maximum pressure in the hydraulic circuit 15, in particular the pressure in the second regulation unit 17.

The protection valves 19 for the hydraulic circuit of the first and second regulation units 16 and 17 are therefore directly associated with the respective proportional valves with reverse logic 18.

The valves 19 are therefore calibrated to a maximum pressure that each regulation unit 16 and 17 of the hydraulic circuit 15 can reach.

In the part of the hydraulic circuit 15 shown in fig. 2, it can be observed that the work unit 11 can comprise a hydraulic motor 20 associated with a negative brake 21.

This work unit 11 is fed for example by a work fluid by means of a pump 22, able to draw the work fluid from a tank 23.

The hydraulic circuit 15 comprises a valve unit 24 for a hydraulic connection between the work unit 11 and the unit 13 for winding and unwinding the cables 39.

In the part of the hydraulic circuit 15 shown in fig. 3, it can be observed that the unit 13 for winding and unwinding the cables 39 comprises a hydraulic motor 25 associated with a negative brake 26.

This unit 13 is fed, for example, by a work fluid by means of a pump 27, able to draw the work fluid from a tank 28.

The pumps 22 and 27 can be associated with suitable drive means, for example a diesel engine.

The stringing apparatus 10 can be installed on a railway wagon 32 mobile along a railway line 33, for example a towed or self-propelled railway wagon 32 for stringing a railway contact line.

Fig. 2 and fig. 3 show parts of a hydraulic circuit 15 relating respectively to a pair of capstans 12 and to a reel 14, therefore in the overall hydraulic circuit these parts will be substantially doubled since two pairs of capstans 12 and two reels 14 are provided, so as to be able to perform the operation of braked laying of two cables 39 or conductors simultaneously by means of two independent circuits.

The proportional valve with reverse logic 18, provided in the regulation units 16 and 17, is characterized by the following behavior: remove current to increase the draw and give current to decrease the draw. Therefore, faced with an emergency situation which causes the failure of the electric power supply to these valves 18, the pressure of the hydraulic circuit 15 is taken to the highest possible value. Substantially, therefore, the proportional valve with reverse logic 18 moves to the position of maximum closure, that is, to the maximum pressure of the regulating range, once the piloting of the valve itself fails.

This fact would seem anomalous and in contrast with the need to secure the plant without overloading the cables 39 subjected to the stringing, in particular the branches 39a; however, the protection valve 19 for the hydraulic circuit 15 intervenes at this point. Such valve 19, provided in the regulation units 16 and 17, can be a manually commanded relief valve.

Substantially, therefore, in an emergency situation that causes the failure of the electric power supply of the proportional valves with reverse logic 18, it is provided to increase the pressure in the regulation units 16 and 17 of the hydraulic circuit 15 by means of maximum closure of the proportional valves with reverse logic 18 and by limiting and therefore controlling this maximum pressure by means of the protection valves 19.

The valve 19 is inserted in the corresponding regulation unit 16, 17 in order to limit the maximum operating hydraulic pressure, and has to be set manually every time the draw is set, for example through a procedure guided by a corresponding software.

The valves 19 to protect the circuit are normally panel mounted, together with a dedicated pressure gauge to read the set pressure value and the corresponding associated braking draw, for example by means of a graduated ring nut applied on the pressure gauge itself. In the event of an emergency intervention, the proportional valves with reverse logic 18 that are not powered move to a condition of maximum pressure, and the manually regulated relief valves 19 intervene as draw limiters, ensuring that the suitably pre-set value is not exceeded.

The negative brake 21 can be associated with an opening electro valve 29 provided in the first regulation unit 16.

In particular, the electro valve 29 can be provided with a "detent", that is, a mechanical position fixing, and can be coupled with a pressure switch in order to monitor the opening pressure. The pressure switch allows to monitor piloting, making a comparison between the opening command and the actual position and excitation. If an error is detected, an alarm is signaled on a monitor available to the operator.

In an emergency situation or when there is a power failure, this type of electro valve 29 maintains the position in which it was commuted (detent), and therefore keeps the negative brake 21 open, preventing an untimely and dangerous stop.

The regulation units 16 and 17 can also comprise direction valves 30, able to establish the direction of the work fluid in the work unit 11 and in the unit 13 for winding and unwinding the cables 39. The direction valves 30 will be provided if the apparatus 10 has a bidirectional functioning, that is, it is possible to choose the direction of work, that is, the direction of stringing. However, such direction valves 30 can be omitted in the case of an apparatus 10 with unidirectional functioning, therefore without selection of the direction of stringing.

The first regulation unit 16, provided in the work unit 11, can also comprise a hydraulic accumulator 31, able to guarantee the minimum opening pressure of the negative brakes 21 of the capstans 12.

If during the stringing operations the emergency button is pressed, the diesel engine switches off immediately: in this situation the accumulator 31 allows to keep the negative brakes 21 open and it is therefore possible to continue the stringing operations with the apparatus 10 functioning as a passive brake.

If in this situation the apparatus 10 stops, again with the diesel engine off, the apparatus 10 can in any case restart because the negative brakes 21 of the capstans 12 remain open thanks to the presence of the electro valves 29, which even without power supply maintain the position in which they were commuted before the emergency button was pressed, and for a limited period of time the necessary pressure is guaranteed by the accumulator 31. It is also possible to check the state of charge of the accumulator 31, for example by means of a pressure gauge.

Restarting after the railway carriage 32 has stopped, there will be a breakaway peak for the opening of the negative brake 26 of the winding and unwinding unit 13 which, since it is not under accumulator but opened directly by the pressure of the counter-draw, will initially offer minimum resistance, only to then open when the hydraulic motor 25 starts to turn and the pressure on the counter-draw branch is generated, and consequently the negative brake 26 is kept open.

The first regulation unit 16 associated with the work unit 11 can also be equipped with a recovery or release valve 34 associated with the capstan 12, for example a control electro valve. This valve 34 is substantially a valve for distributing or selecting the direction of the fluid, it does not condition the pressure or other operating parameters.

The second regulation unit 17 can be equipped with a discharge valve 35 associated with the reel 14, for example an electro valve.

The second regulation unit 17 can also be equipped with a valve 36 for enabling the reel, for example an electro valve.

The apparatus 10, see again fig. 1, can be provided with a command console 37 by means of which an operator can put the apparatus into action and select different functioning modes, such as manual or local functioning and automatic functioning, for example by means of a key selector. The command console 37 can be equipped with a control panel, a display for viewing data or suchlike.

Below are two examples of calibration and functioning procedures of the work unit 11 and the unit 13 for winding and unwinding the cables 39.

With regard to the first regulation unit 16 associated with the work unit 11 and therefore with the capstans 12, a sequence for the calibration and functioning of the valves provided therein is as follows:
a1) the direction valves 30, if provided, are commuted when the operator has chosen the desired stringing direction;
a2) the operator presses a CALIBRATION button provided on the control panel: the revolutions of the diesel engine are increased ramping up to, for example, 1800 rpm and at the same time the recovery valves 34 are commuted;
a3) the proportional valves with reverse logic 18 move to the set working value plus an interval sufficient to be able to carry out the calibration of the safety valve 19 located on the emergency panel to a value slightly higher than the actual working value;
a4) the software checks that the proportional valve with reverse logic 18 is in position and that the revolutions of the diesel engine are at the required value;
a5) the software checks and compares the set value and the pressure value of the manual valve 19 on the emergency panel;
a6) if the pressure detected by the safety valve 19 is within a range of acceptance, a PRE-START button is enabled;
a7) when the PRE-START button is pressed, the proportional valves with reverse logic 18 return to the real drawing value set and not to that of the calibration function.

With regards to the second regulation unit 17 associated with the unit 13 for winding and unwinding the cables 39 and therefore with the reels 14, a sequence for the calibration and functioning of the valves provided in the second regulation unit 17 is as follows:
When the PRE-START button is pressed, the procedure on the reels 14 of the unit 13 for winding and unwinding the cables 39 also starts:
b1) the direction valve 30 is positioned according to the choice made with reference to point a1 of the procedure for the first regulation unit 16;
b2) the discharge valve 35 is activated;
b3) the proportional valve with reverse logic 18 of the second regulation unit 17 moves to the set value and the enabling valve 36 is excited: a pressure check is carried out because an absence of pressure would mean the absence of tension in the cables 39 between the capstans 12 and the reels 14, in particular in the branches 39b, and there is a check to ensure that for at least a determinate period of time of a few seconds, typically 2 seconds, this pressure is maintained;
b4) if the above is complied with, a START key is displayed on the control panel;
b5) if the operator presses the START button, the negative brakes 21 of the capstans open and the apparatus 10 is ready to work; the hydraulic circuit 15 is under pressure and the pressures can be controlled by means of pressure switches located at the inlets of the hydraulic motors 20 and 25.

It is clear that modifications and/or additions of parts may be made to the apparatus for stringing cables provided with security system and to the securing method as described heretofore, without departing from the scope of the present invention as defined in the claims.

In the following claims, the sole purpose of the references in brackets is to facilitate reading: they must not be considered as restrictive factors with regard to the field of protection claimed in the specific claims.

## Claims

1. Apparatus (10) for stringing cables (39), comprising:
a work unit (11) carrying at least one rotating device (38) to support and tension the cables (39) provided with at least one pair of capstans (12);
a unit (13) for winding and unwinding the cables (39) provided with at least one reel (14) for winding and unwinding the cables (39);
a regulation and safety hydraulic circuit (15) in which a work fluid flows and with which at least said work unit (11) and said unit (13) for winding and unwinding the cables (39) are associated,
said apparatus being **characterized in that** it comprises:
at least a first regulation unit (16) associated with said work unit (11) and provided with:
at least one proportional valve with reverse logic (18) for regulating and setting the pressure of the hydraulic circuit (15) and for drawing the cables (39) to the capstans (12), said proportional valve with reverse logic (18) being configured to move to the position of maximum closure, that is, to the maximum pressure of the regulating range, once the piloting of the valve itself fails; and
at least one protection valve (19) for the hydraulic circuit (15) configured to limit the maximum pressure in the hydraulic circuit (15); and
at least a second regulation unit (17) associated with said unit (13) for winding and unwinding the cables (39) and provided with:
at least one proportional valve with reverse logic (18) for regulating and setting the pressure of the hydraulic circuit (15) and for drawing the cables (39) to the reel (14), said proportional valve with reverse logic (18) being configured to move to the position of maximum closure, that is, to the maximum pressure of the regulating range, once the piloting of the valve itself fails; and
at least one protection valve (19) for the hydraulic circuit (15) configured to limit the maximum pressure in the hydraulic circuit (15).

2. Apparatus as in claim 1, **characterized in that** said valve (19) to protect the hydraulic circuit (15) is a manually commanded relief valve.

3. Apparatus as in claim 1 or 2, **characterized in that** said work unit (11) and said unit (13) for winding and unwinding the cables (39) are provided with negative brakes (21, 26) cooperating with said rotating device (38) and with said reel (14).

4. Apparatus as in claim 3, **characterized in that** said negative brake (21) is associated with at least one opening electro valve (29) provided in said first regulation unit (16).

5. Apparatus as in any claim hereinbefore, **characterized in that** said first regulation unit (16) and said second regulation unit (17) comprise at least one direction valve (30).

6. Apparatus as in any claim hereinbefore, **characterized in that** said first regulation unit (16) comprises at least one hydraulic accumulator (31).

7. Apparatus as in any claim hereinbefore, **characterized in that** said first regulation unit (16) comprises at least one recovery and release valve (34).

8. Apparatus as in any claim hereinbefore, **characterized in that** said second regulation unit (17) comprises at least one discharge valve (35).

9. Apparatus as in any claim hereinbefore, **characterized in that** said second regulation unit (17) comprises at least one enabling valve (36).

10. Railway wagon (32), mobile along a railway line (33) and comprising an apparatus (10) for stringing cables as in any claim hereinbefore.

11. Method for stringing cables by means of an apparatus (10) for stringing cables (39) as in any claim hereinbefore, comprising in an emergency situation that causes the failure of the electric power supply of the proportional valves with reverse logic (18), increasing the pressure in the regulation units (16, 17) of the hydraulic circuit (15) by means of maximum closure of said proportional valves with reverse logic (18) and limiting said maximum pressure by means of the protection valves (19).

## Patentansprüche

1. Vorrichtung (10) zum Aufziehen bzw. Verlegen von Kabeln (39), die das Folgende umfasst:
eine Arbeitseinheit (11), die mindestens eine sich drehende Vorrichtung (38) zum Stützen und Spannen der Kabel (39) trägt, die mit mindestens einem Paar Antriebsrollen (12) ausgestattet ist,
eine Einheit (13) zum Auf- und Abwickeln der Kabel (39), die mit mindestens einer Rolle (14) zum Auf- und Abwickeln der Kabel (39) ausgestattet ist,
einen Regel- und Sicherheitshydraulikkreis (15), in dem ein Arbeitsfluid fließt und mit dem zumindest die Arbeitseinheit (11) und die Einheit (13) zum Auf- und Abwickeln der Kabel (39) verbunden sind,
wobei die Vorrichtung **dadurch gekennzeichnet ist, dass** sie Folgendes umfasst:
zumindest eine erste Regeleinheit (16), die mit der Arbeitseinheit (11) verbunden ist und mit Folgendem ausgestattet ist:
mindestens ein Proportionalventil mit Umkehrlogik (18) zum Regeln und Einstellen des Drucks des Hydraulikkreises (15) und zum Ziehen der Kabel (39) zu den Antriebsrollen (12), wobei das Proportionalventil mit Umkehrlogik (18) so konfiguriert ist, dass es sich in die Position maximaler Schließung bewegt, d. h. auf den Maximaldruck im Regelbereich, wenn die Steuerung des Ventils selbst ausfällt; und
mindestens ein Schutzventil (19) für den Hydraulikkreis (15), das so konfiguriert ist, dass es den Maximaldruck im Hydraulikkreis (15) begrenzt; und
zumindest eine zweite Regeleinheit (17), die mit der Einheit (13) zum Auf- und Abwickeln der Kabel (39) verbunden ist und mit Folgendem ausgestattet ist:
mindestens ein Proportionalventil mit Umkehrlogik (18) zum Regeln und Einstellen des Drucks des Hydraulikkreises (15) und zum Ziehen der Kabel (39) zur Rolle (14), wobei das Proportionalventil mit Umkehrlogik (18) so konfiguriert ist, dass es sich in die Position maximaler Schließung bewegt, das heißt, auf den Maximaldruck im Regelbereich, wenn die Steuerung des Ventils selbst ausfällt; und
mindestens ein Schutzventil (19) für den Hydraulikkreis (15), das so konfiguriert ist, dass es den Maximaldruck im Hydraulikkreis (15) begrenzt.

2. Vorrichtung gemäß Anspruch 1, **dadurch gekennzeichnet, dass** das Ventil (19) zum Schutz des Hydraulikkreislaufs (15) ein manuell gesteuertes Überdruckventil ist.

3. Vorrichtung gemäß Anspruch 1 oder 2, **dadurch gekennzeichnet, dass** die Arbeitseinheit (11) und die Einheit (13) zum Auf- und Abwickeln der Kabel (39) mit Negativbremsen (21, 26) versehen ist, die mit der Drehvorrichtung (38) und der Rolle (14) zusammenwirken.

4. Vorrichtung gemäß Anspruch 3, **dadurch gekennzeichnet, dass** die Negativbremse (21) mit mindestens einem in der ersten Regeleinheit (16) vorgesehenen Öffnungselektroventil (29) verbunden ist.

5. Vorrichtung gemäß einem der vorstehenden Ansprüche, **dadurch gekennzeichnet, dass** die erste Regeleinheit (16) und die zweite Regeleinheit (17) mindestens ein Richtungsventil (30) umfassen.

6. Vorrichtung gemäß einem der vorstehenden Ansprüche, **dadurch gekennzeichnet, dass** die erste Regeleinheit (16) mindestens einen Hydraulikspeicher (31) umfasst.

7. Vorrichtung gemäß einem der vorstehenden Ansprüche, **dadurch gekennzeichnet, dass** die erste Regeleinheit (16) mindestens ein Rückschlag- und Ablassventil (34) umfasst.

8. Vorrichtung gemäß einem der vorstehenden Ansprüche, **dadurch gekennzeichnet, dass** die zweite Regeleinheit (17) mindestens ein Ablassventil (35) umfasst.

9. Vorrichtung nach einem der vorstehenden Ansprüche, **dadurch gekennzeichnet, dass** die zweite Regeleinheit (17) mindestens ein Freigabeventil (36) umfasst.

10. Eisenbahnwaggon (32), der entlang einer Bahnlinie (33) beweglich ist und eine Vorrichtung (10) zum Aufziehen bzw. Verlegen von Kabeln gemäß einem der vorstehenden Ansprüche umfasst.

11. Verfahren zum Aufziehen bzw. Verlegen von Kabeln mittels einer Vorrichtung (10) zum Aufziehen bzw. Verlegen von Kabeln (39) gemäß einem der vorstehenden Ansprüche, umfassend, in einer Notsituation, die einen Ausfall der Stromversorgung der Proportionalventile mit Umkehrlogik (18) verursacht, das Erhöhen des Drucks in den Regeleinheiten (16, 17) des Hydraulikkreises (15) mittels maximaler Schließung der Proportionalventile mit Umkehrlogik (18) und das Begrenzen des Maximaldrucks mittels der Schutzventile (19).

## Revendications

1. Appareil (10) pour mettre en place des câbles (39), comportant :
une unité de travail (11) transportant au moins un dispositif rotatif (38) pour soutenir et tendre les câbles (39), pourvue d'au moins une paire de cabestans (12),
une unité (13) d'enroulement et de déroulement des câbles (39) pourvue d'au moins un dévidoir (14) pour enrouler et dérouler les câbles (39),
un circuit hydraulique de régulation et de sécurité (15) dans lequel un fluide de travail circule et auquel au moins ladite unité de travail (11) et ladite unité (13) d'enroulement et de déroulement des câbles (39) sont associées,
ledit appareil étant **caractérisé en ce qu'**il comporte :
au moins une première unité de régulation (16) associée à ladite unité de travail (11) et pourvue de :
au moins une soupape proportionnelle à logique inverse (18) pour réguler et régler la pression du circuit hydraulique (15) et pour tirer les câbles (39) jusqu'aux cabestans (12), ladite soupape proportionnelle à logique inverse (18) étant configurée pour passer à la position de fermeture maximale, c'est-à-dire la pression maximale de la plage de régulation, une fois que le pilotage de la soupape elle-même échoue, et
au moins une soupape de protection (19) pour le circuit hydraulique (15) configurée pour limiter la pression maximale dans le circuit hydraulique (15), et
au moins une seconde unité de régulation (17) associée à ladite unité (13) d'enroulement et de déroulement des câbles (39) et pourvue de :
au moins une soupape proportionnelle à logique inverse (18) pour réguler et régler la pression du circuit hydraulique (15) et pour tirer les câbles (39) jusqu'au dévidoir (14), ladite soupape proportionnelle à logique inverse (18) étant configurée pour passer à la position de fermeture maximale, c'est-à-dire la pression maximale de la plage de régulation, une fois que le pilotage de la soupape elle-même échoue, et
au moins une soupape de protection (19) pour le circuit hydraulique (15) configurée pour limiter la pression maximale dans le circuit hydraulique (15).

2. Appareil selon la revendication 1, **caractérisé en ce que** ladite soupape (19) pour protéger le circuit hydraulique (15) est une soupape de décharge commandée manuellement.

3. Appareil selon la revendication 1 ou 2, **caractérisé en ce que** ladite unité de travail (11) et ladite unité (13) d'enroulement et de déroulement des câbles (39) sont pourvues de freins négatifs (21, 26) coopérant avec ledit dispositif rotatif (38) et avec ledit dévidoir (14).

4. Appareil selon la revendication 3, **caractérisé en ce que** ledit frein négatif (21) est associé à au moins une électrovanne d'ouverture (29) agencée dans ladite première unité de régulation (16).

5. Appareil selon l'une quelconque des revendications précédentes, **caractérisé en ce que** ladite première unité de régulation (16) et ladite seconde unité de régulation (17) comportent au moins une soupape de direction (30).

6. Appareil selon l'une quelconque des revendications précédentes, **caractérisé en ce que** ladite première unité de régulation (16) comporte au moins un accumulateur hydraulique (31).

7. Appareil selon l'une quelconque des revendications précédentes, **caractérisé en ce que** ladite première unité de régulation (16) comporte au moins une soupape de récupération et de libération (34).

8. Appareil selon l'une quelconque des revendications précédentes, **caractérisé en ce que** ladite seconde unité de régulation (17) comporte au moins une soupape d'évacuation (35).

9. Appareil selon l'une quelconque des revendications précédentes, **caractérisé en ce que** ladite seconde unité de régulation (17) comporte au moins une soupape d'activation (36).

10. Wagon ferroviaire (32), mobile le long d'une voie ferrée (33) et comportant un appareil (10) pour mettre en place des câbles selon l'une quelconque des revendications précédentes.

11. Procédé pour mettre en place des câbles au moyen d'un appareil (10) pour mettre en place des câbles (39) selon l'une quelconque des revendications précédentes, comportant dans une circulation d'urgence qui entraîne la défaillance de l'alimentation électrique des soupapes proportionnelles avec logique inverse (18), d'augmenter la pression dans les unités de régulation (16, 17) du circuit hydraulique (15) par une fermeture maximale desdites soupapes proportionnelles avec logique inverse (18) et de limiter ladite pression maximale au moyen des soupapes de protection (19).
